Europäisches Patentamt

European Patent Office

Office européen des brevets

(11) Veröffentlichungsnummer : **0 255 839 B1**

## (12) EUROPÄISCHE PATENTSCHRIFT

(45) Veröffentlichungstag der Patentschrift :
25.03.92 Patentblatt 92/13

(21) Anmeldenummer : 87904795.9

(22) Anmeldetag : 15.01.87

(86) Internationale Anmeldenummer :
PCT/EP87/00014

(87) Internationale Veröffentlichungsnummer :
WO 87/04885 13.08.87 Gazette 87/18

(51) Int. Cl.⁵ : **H04N 5/63**

(54) SCHALTNETZTEIL FÜR FERNSEHGERÄTE.

(30) Priorität : 31.01.86 DE 3602858

(43) Veröffentlichungstag der Anmeldung :
17.02.88 Patentblatt 88/07

(45) Bekanntmachung des Hinweises auf die
Patenterteilung :
25.03.92 Patentblatt 92/13

(84) Benannte Vertragsstaaten :
AT BE CH DE FR GB IT LI LU NL SE

(56) Entgegenhaltungen :
FR-A- 2 520 958
US-A- 3 956 669
US-A- 4 024 577

(73) Patentinhaber : Deutsche Thomson-Brandt
GmbH
Hermann-Schwer-Strasse 3 Postfach 1307
W-7730 Villingen-Schwenningen (DE)

(72) Erfinder : HARTMANN, Uwe
Tallardstrasse 15
W-7730 Villingen-Schwenningen (DE)
Erfinder : MAI, Udo
Mühleschweg 2
W-7730 VS-Villingen 23 (DE)

EP 0 255 839 B1

**Beschreibung**

Die Erfindung geht aus von einem Schaltnetzteil für Fernsehgeräte, die auf Stand-by-Betrieb umschaltbar sind und die mit einer über 15 kHz liegenden Zeilenfrequenz betrieben werden, wobei das Schaltnetzteil während der Wiedergabe von Fernsehsignalen mit dieser Zeilenfrequenz gesteuert wird.

Zukünftig werden an Schaltnetzteile von Fernsehgeräten grössere Anforderungen gestellt, wenn diese im Stand-by-Betrieb neben der Bereitschaft zum fernbedienten Einschalten des Empfängers auch noch für andere weitere Funktionen empfangsbereit sein sollen.

So dient z.B. das von den Sendern ausgestrahlte VPS-Signal (Video-Programm-System) dazu, den Videorecorder zu einem vorprogrammierten Zeitpunkt automatisch einzuschalten bzw. zu starten. Auch zum Empfang von Videotextsignalen muss der Empfänger bereit sein, um diese abzuspeichern, damit der Fernsehteilnehmer diese bei Bedarf im sogenannten "After-Hour-Betrieb" abrufen und auf dem Bildschirm des Fernsehempfängers sichtbar machen kann. Da der Videotextdecoder einschließlich Tuner und Zwischenfrequenzstufen eingeschaltet sein muss, sind an den Netzspannungsbereich sowie an die Konstanz der Betriebsspannungen die gleichen Anforderungen zu stellen wie bei einem normal arbeitenden Fernsehempfänger. Zum Zweck der Aufrechterhaltung der Spannungsversorgung könnte ein separates Netzteil vorgesehen werden. Da jedoch die Leistungsaufnahme im Stand-by-Betrieb für eine linear arbeitende Stabilisierung zu hoch ist - mit der damit verbundenen großen Verlustleistung - und für ein zusätzlich eingebautes Schaltnetzteil zu gering - mit den damit verbundenen hohen Kosten -, muss ein Kompromiss zwischen diesen beiden Lösungen gefunden werden.

Die aus der FR-A-25 20 958 bekannte Schaltungsanordnung bezieht sich auf ein Schaltnetzteil, das zwar ebenfalls in einen Stand-by-Betrieb umschaltbar ist, jedoch wird hier nicht die Zeilenfrequenz im Stand-by-Betrieb heruntergeteilt, sondern das Schaltnetzteil schwingt frei bei einer etwas unterhalb der Zeilenfrequenz liegenden Frequenz.

Bei der Erfindung dagegen wird im Stand-by-Betrieb auf eine definierte Frequenz umgeschaltet und mit dieser das Schaltnetzteil synchronisiert. Die Frequenz ergibt sich durch Teilung um einen ganzzahliegen Betrag - in diesem Fall durch den Faktor 2 -, wobei diese Taktfrequenz immer noch außerhalb des Hörbereiches liegen soll, um den Stand-by-Betrieb von störenden Geräuschen zu befreien.

Der Erfindung liegt die Aufgabe zugrunde, unter den oben angegebenen Voraussetzungen ein Schaltnetzteil derart aufzubauen, daß es diese extremen Leistungsunterschiede verarbeitet und in der Lage ist, auch im Stand-by-Betrieb geregelte Betriebsspannungen zu liefern. Das bisher übliche Schaltnetzteil ist dafür ungeeignet, da die großen Leistungsunterschiede wegen der endlichen Schaltgeschwindigkeiten der zur Zeit verfügbaren Transistoren nicht abgedeckt werden können.

Die Aufgabe wird durch die im Patentanspruch angegebene Lehre gelöst. Vorteilhafte Ausgestaltungen der Erfindung ergeben sich aus den abhängigen Patentansprüchen.

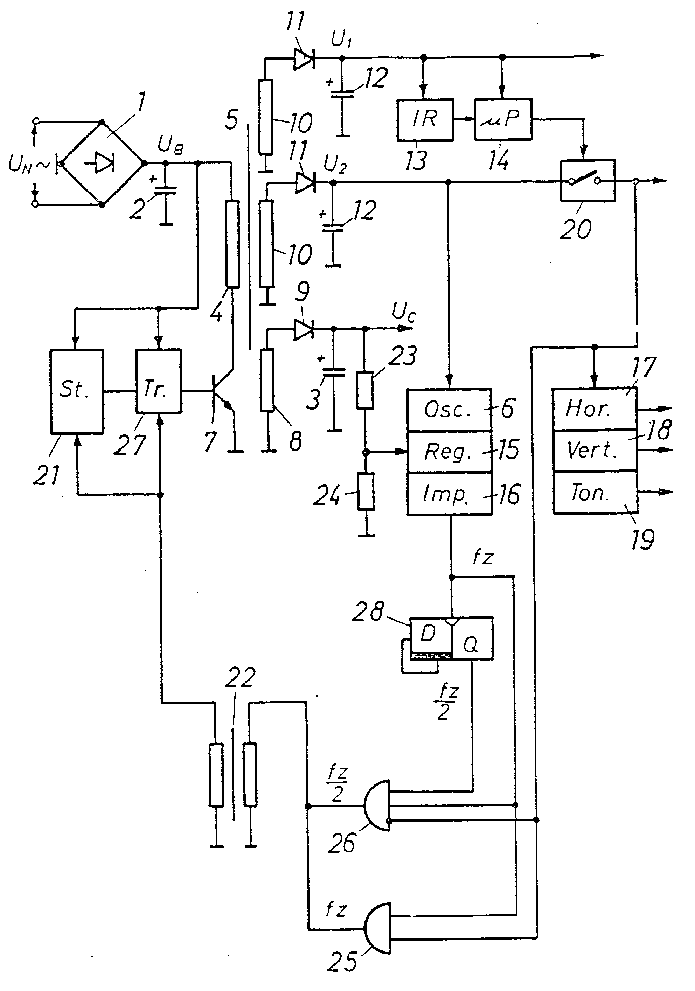

Nachstehend wird die Erfindung mit Hilfe der Zeichnung an einem möglichen Ausführungsbeispiel erläutert. Es liegt aber im Rahmen der Erfindung, wenn die angemeldete Schaltungsmaßnahme auch auf anders aufgebaute Schaltnetzteile angewendet wird. Die Erfindung geht davon aus, daß die Fernsehgeräte zukünftig zwecks Verbesserung der Bildwiedergabe mit einer erhöhten Zeilen- und Bildfrequenz betrieben werden, z.B. mit den doppelten Werten.

Das bekannte Schaltnetzteil ist über den Gleichrichter 1 und das Siebglied 2 an die Netzwechselspannung UN angeschlossen und erzeugt aus der ungeregelten Betriebsspannung UB die stabilisierte Gleichspannung UC, indem die Primärwicklung 4 des Schaltnetzteiltransformators 5 im Takt der von einem Oszillator 6 gelieferten Impulsfrequenz $f_z$ über einen elektronischen Schalter 7 nach Masse geschaltet und die in der Primärwicklung 4 gespeicherte magnetische Energie auf die Sekundärseite in die Sekundärwicklung 8 übertragen wird, wonach die an der Sekundärwicklung 8 liegende Spannung über den Gleichrichter 9 gleichgerichtet und als stablilisierte Spannung UC am Kondensator 3 zur Verfügung steht. Weitere stabile Spannungen U können über Sekundärwicklungen 10 und Gleichrichter 11 an Kondensatoren 12 abgegriffen werden. Hierbei dient z.B. die Spannung U1 zur Stromversorgung eines Infrarot-Fernsteuerempfängers 13 und eines Mikroprozessors 14, die Spannung U2 zur Stromversorgung des Oszillators 6, einer Regelschaltung 15 sowie eines Impulsbreiten-Modulators 16. Die Leistungsstufen für Horizontalablenkung 17 und Vertikalablenkung 18 und den Ton 19 werden von der Spannung U2 über einen vom Mikroprozessor 14 gesteuerten Schalter 20 versorgt.

Bei Inbetriebnahme des Fernsehempfängers wird das Schaltnetzteil über einen Startoszillator 21 eingeschaltet, wie dies in der älteren Patentanmeldung DE-A-35 40 802 veröffentlicht am 21.5.1987, eingehend beschrieben wird. Im eingeschwungenen Zustand des Schaltnetzteils wird dieser Startoszillator 21 über die aus dem Transformator 22 gelieferten Impulse ausser Betrieb gesetzt. Die Impulsbreite der Impulse $f_z$ wird in Abhängigkeit von der über die Widerstände 23 und 24 erhaltene Regelinformation verändert. Eine Ansteuerschaltung 27 schaltet in Abhängigkeit von der Belastung des Schaltnetzteils und von Netzspannungsschwankungen den elektronischen Schalter 7 durch, indem die Impulse aus dem Impulsbreiten-Modulator 16, welche durch eine Regelschaltung 15 in ihrer Breite veränderbar sind, über die netztrennende Koppelschaltung z.B. in Form eines Transformators 22 an die Ansteuerschaltung 27 gelegt sind.

Bei Wiedergabe eines Fernsehsignals, d.h. im normalen Betriebszustand des Fernsehempfängers sind durch den vom Fernsteuerempfänger 13 und den Mikroprozessor 14 erzeugten Einschaltbefehl die Endstufen für die Zeilenablenkung 17, für die Bildablenkung 18 und für den Ton 19 über den Schalter 20 in Betrieb. Die vom Oszillator 6 erzeugte Schaltfrequenz $f_z$ gelangt über eine Torschaltung 25 und den Transformator 22 an die Ansteuerschaltung 27. Im Stand-by-Betrieb werden die Endstufen durch ein Signal aus dem Mikroprozessor 14 über den Schalter 20 abgeschaltet und das Tor 25 wird gesperrt. Stattdessen gelangen die Oszillatorschwingungen $f_z$ über eine bistabile Kippstufe 28 an ein Tor 26, welches nur jeden zweiten Impuls an die Ansteuerschaltung 27 gelangen läßt. Es findet in dem gezeigten Beispiel eine Teilung durch zwei statt. Bei einer Zeilenfrequenz von z.B. 32 kHz wird die Schaltfrequenz auf 16 kHz heruntergeteilt. Die Frequenz $f_z$ sollte aus Qualitätsgrunden in Verbindung mit dem Teilungsfaktor derart gewählt werden, daß die geteilte Frequenz, hier $f_z/2$, gerade noch nicht in den Hörbereich fällt. Der maximal mögliche Regelbereich wird durch Halbierung der Frequenz zwar nur zur Hälfte ausgenutzt, jedoch reicht dieser Regelbereich für einen Stand-by-Betrieb mit konstanter Last wie in dem angewendeten Fall vollkommen aus.

Die Erfindung bringt den Vorteil, die eingangs zitierte Aufgabe bei einem Schaltnetzeil ohne großen Aufwand zu lösen, d.h. ohne die Kosten wesentlich zu erhöhen, insbesondere dann, wenn der anfallende Aufwand in eine vorhandene integrierte Schaltung mit aufgenommen werden kann.

## Patentansprüche

1. Schaltnetzteil für Fernsehgeräte, die auf Stand-by-Betrieb umschaltbar sind und die mit einer über 15 kHz liegenden Zeilenfrequenz betrieben werden, **dadurch gekennzeichnet**, daß die Zeilenfrequenz im Stand-by-Betrieb über eine Frequenzteilerschaltung (28) das Schaltnetzteil synchronisiert.

2. Schaltnetzteil nach Anspruch 1, **dadurch gekennzeichnet**, daß das Teilerverhältnis der Frequenzteilerschaltung (28) derart gewählt ist, daß die geteilte Frequenz gerade oberhalb der Hörbarkeitsgrenze liegt.

3. Schaltnetzteil nach Anspruch 1, **dadurch gekennzeichnet**, daß die Zeilenfrequenz im Verhältnis eins zu zwei geteilt wird.

4. Schaltnetzteil nach Anspruch 1, **dadurch gekennzeichnet**, daß die Frequenzteilerschaltung (28) aus einer bistabilen Kippschaltung besteht, die bei Wiedergabe von Fernsehsignalen außer Betrieb gesetzt wird.

## Claims

1. A switched-mode power supply for televisions which can be switched over to stand-by mode and which are operated at a line frequency which is over 15 kHz, **characterised in that** in stand-by mode the line frequency synchronises the switched-mode power supply by means of a frequency divider circuit (28).

2. A switched-mode power supply according to claim 1, **characterised in that** the divider ratio of the frequency divider circuit (28) is selected such that the divided frequency is just above the audibility limit.

3. A switched-mode power supply according to claim 1, **characterised in that** the line frequency is divided in the ratio one to two.

4. A switched-mode power supply according to claim 1, **characterised in that** the frequency divider circuit (28) consists of a bistable circuit which is put out of operation on playback of television signals.

## Revendications

1. Bloc d'alimentation et de commutation pour appareils de télévision qui peuvent être commutés en veille et qui fonctionnent avec une fréquence de lignes supérieure à 15 kHz, **caractérisé en ce** que la fréquence de lignes synchronise, en veille, le bloc d'alimentation et de commutation par un circuit diviseur de fréquence (28).

2. Bloc d'alimentation et de commutation selon la revendication 1, **caractérisé en ce** que le rapport de division du circuit diviseur de fréquence (28) est sélectionné de manière telle que la fréquence divisée est juste au-dessus de la limite d'audibilité.

3. Bloc d'alimentation et de commutation selon la revendication 1, **caractérisé en ce** que la fréquence de lignes est divisée selon le rapport un par deux.

4. Bloc d'alimentation et de commutation selon la fréquence 1, **caractérisé en ce** que le circuit diviseur de fréquence (28) est constitué par un montage en bascule bistable qui est mis hors circuit lors de la restitution de signaux de télévision.